# EUROPEAN PATENT APPLICATION

(11) **EP 4 316 800 A1**
(43) Date of publication of application: **07.02.2024**
(21) Application number: 22779944.2
(22) Date of filing: 10.03.2022
(51) Int. Cl.: B32B 5/18

(54) **LAMINATE**

(30) Priority: 31.03.2021 JP 2021061780
(71) Applicant: ASAHI KASEI KABUSHIKI KAISHA, Tokyo 100-0006, (JP)
(72) Inventor: KASAI Tatsuaki, Tokyo 1000006 (JP)
(74) Representative: D Young & Co LLP
(86) International application number: PCT/JP2022/010744
(87) International publication number: WO 2022/209723

(57) **Abstract**

A laminate comprises: an incombustible layer that contains at least one selected from the group consisting of an organic substance and a fiber-reinforced resin obtained by impregnating a fiber made of a non-metallic inorganic substance with a resin and has an oxygen index of 25 or more; and a flame-retardant foam layer that contains a foam and whose flammability level measured based on an UL94 vertical flame test is V-2 to V-0.

## Description

### TECHNICAL FIELD

The present disclosure relates to a laminate.

### BACKGROUND

In the event of a fire in vehicles, such as automobiles, in which people ride, home appliances, etc., it is necessary to protect passengers or surrounding components (especially components that are likely to promote fire, such as electrical components, internal combustion engines, and fuel tanks) from flames to enhance safety.

One known method for improving safety is a method that provides barriers for protecting passengers and surrounding components.

Metal members are typically used for barriers from the viewpoint of strength, processability, cost, etc. However, since metal usually has high thermal conductivity, the temperature of fire is transmitted quickly. There is also a need to reduce the weights of members in order to improve energy utilization efficiency.

To deal with these problems, examples of producing barriers from lightweight members such as resin have been reported (see, for example, PTL 1 to PTL 6).

### CITATION LIST

### Patent Literature

PTL 1: JP 2014-224648 A
PTL 2: JP H6-008045 U
PTL 3: JP H6-198790 A
PTL 4: JP 2008-308176 A
PTL 5: JP 2009-35915 A
PTL 6: JP 2018-079630 A

### SUMMARY

### (Technical Problem)

However, the conventional barriers using resin are more combustible than metal, and accordingly are not sufficiently effective as barriers.

Accordingly, the present disclosure is made in light of the problem set forth above and an objective thereof is to provide a laminate having excellent heat transfer delay property.

### (Solution to Problem)

Upon careful examination, the present inventor discovered that a laminate including an incombustible layer having a specific composition and oxygen index and a flame-retardant foam layer can solve the foregoing problems.

Specifically, the present disclosure is as follows.
[1] A laminate comprising: an incombustible layer that contains at least one selected from the group consisting of an organic substance and a fiber-reinforced resin obtained by impregnating a fiber made of a non-metallic inorganic substance with a resin and has an oxygen index of 25 or more; and a flame-retardant foam layer that contains a foam and whose flammability level measured based on an UL94 vertical flame test is V-2 to V-0.
[2] The laminate according to [1], wherein the incombustible layer contains a woven fabric or a nonwoven fabric.
[3] The laminate according to [1] or [2], wherein the foam contains a bead foam.
[4] The laminate according to any one of [1] to [3], wherein the incombustible layer contains a woven fabric or a nonwoven fabric made of an organic substance.
[5] The laminate according to any one of [1] to [4], comprising an intermediate layer in which a component of the incombustible layer and a component of the foam layer are mixed, between the incombustible layer and the foam layer.
[6] The laminate according to any one of [1] to [5], further comprising a metal layer containing a metal.
[7] The laminate according to any one of [1] to [6], used as a peripheral member of a lithium ion secondary battery.

### (Advantageous Effect)

According to the present disclosure, it is possible to provide a laminate having excellent heat transfer delay property.

### DETAILED DESCRIPTION

An embodiment of the present disclosure (hereinafter also referred to as "this embodiment") will be described in detail below. The present disclosure is not limited to the embodiment described below, and can be implemented with various modifications that do not deviate from the essence thereof.

### [Laminate]

A laminate according to this embodiment comprises: an incombustible layer that contains at least one selected from the group consisting of an organic substance and a fiber-reinforced resin obtained by impregnating a fiber made of a non-metallic inorganic substance with a resin and has an oxygen index of 25 or more; and a flame-retardant foam layer that contains a foam and whose flammability level measured based on an UL94 vertical flame test is V-2 to V-0.

The laminate according to this embodiment has excellent heat transfer delay property as a result of comprising the incombustible layer excellent in incombustibility and flame resistance and the foam layer excellent in flame retardance and thermal insulation. Therefore, for example in the case where the laminate is used for a cover of a lithium ion secondary battery (LIB), when the temperature of the LIB increases suddenly due to overcharging, short circuit, or the like and the LIB undergoes thermal runaway and heats up and catches fire, it is possible to protect the surrounding objects and people from flames and create time to evacuate because the heat transfer to the outside of the cover (laminate) is slow. Moreover, when a fire or the like occurs around the LIB, the LIB can be prevented from suddenly increasing in temperature and undergoing thermal runaway to thus heat up and catch fire because the heat transfer to the inside of the cover (laminate) is slow.

The heat transfer delay property can be evaluated as described in the EXAMPLES section below. In the case where the laminate is exposed to a flame of about 1000 °C, the surface of the laminate opposite to the side exposed to the flame is kept at not higher than a certain temperature for a certain period of time, thus protecting objects and people from the flame. Particularly in the case where the laminate is used as an LIB peripheral member mounted on an automobile, when a fire or the like occurs around the LIB and the laminate is exposed to flames, thermal runaway of the LIB is likely to be prevented if the inside of the laminate can be kept at 200 °C or lower. Conversely, when the LIB undergoes thermal runaway and heats up or catches fire, the time for emergency evacuation of the passengers is likely to be ensured if the outside of the laminate can be kept at not higher than a certain temperature for 150 seconds or more. If the laminate deforms, ignites, or the like, an unexpected problem may occur. Accordingly, it is preferable that such deformation, ignition, etc. do not occur.

The laminate according to this embodiment may include one or more layers other than the incombustible layer and the foam layer. Examples of the other layers include the below-described intermediate layer, metal layer, and adhesive layer.

The number of layers constituting the laminate is not limited, but is preferably 2 to 10 layers, more preferably 2 to 7 layers, and further preferably 2 to 5 layers from the viewpoint of reducing the total thickness and facilitating production.

The thickness of the laminate may be appropriately determined depending on the use of the laminate, but is preferably 0.5 mm to 20 mm, more preferably 0.5 mm to 15 mm, and further preferably 1.0 mm to 10 mm. If the thickness of the laminate is in the foregoing range, the laminate is excellent as a fire barrier, for example, when used as the LIB cover.

### [[Incombustible layer]]

The incombustible layer included in the laminate according to this embodiment contains at least one selected from the group consisting of an organic substance and a fiber-reinforced resin obtained by impregnating a fiber made of a non-metallic inorganic substance with a resin, and has an oxygen index of 25 or more.

The number of incombustible layers is not limited, and may be one layer or a plurality of layers. From the viewpoint of ease of production, suppressing peeling at the lamination interface during combustion, and enhancing incombustibility, a smaller number of incombustible layers is better, and the number of incombustible layers is preferably 5 layers or less, more preferably 4 layers or less, and further preferably 3 layers or less. In the case where there are a plurality of incombustible layers, their compositions may be the same or different.

The incombustible layer preferably forms at least one surface of the laminate (i.e. is preferably a surface layer). If the incombustible layer forms at least one surface, when the surface is exposed to direct fire, the flame can be kept from spreading into the laminate.

The thickness of each incombustible layer may be appropriately determined depending on the use of the laminate, but is preferably 0.1 mm to 5 mm, more preferably 0.5 mm to 5 mm, and further preferably 0.5 mm to 3 mm. The thickness of the incombustible layer (the total thickness in the case where there are a plurality of layers) is preferably 1 % to 80 %, more preferably 1 % to 70 %, and further preferably 1 % to 50 %, where the thickness of the laminate is 100 %. If the thickness of the incombustible layer is in the foregoing range, for example, flames can be kept from spreading over the entire laminate in the case where the laminate is used as the LIB cover, and the foam layer can be effectively protected from direct fire and the heat transfer delay property can be enhanced in the case where the laminate is heated by direct fire. Such a laminate is excellent as a fire barrier.

The oxygen index of the incombustible layer is 25 or more, preferably 30 or more, more preferably 40 or more, and further preferably 50 or more. Although no upper limit is placed on the oxygen index of the incombustible layer, the oxygen index of the incombustible layer is preferably 60 or less from the viewpoint of the production and processability of the laminate according to this embodiment. If the oxygen index of the incombustible layer is in the foregoing range, sufficient incombustibility can be imparted to the laminate.

The oxygen index of the incombustible layer can be adjusted, for example, based on the type, composition, and amount of the materials that constitute the incombustible layer. For example, the oxygen index is higher when the content of combustible material in the incombustible layer is lower, i.e. when the content of highly flame-retardant material in the incombustible layer is higher.

The oxygen index can be determined in accordance with JIS K7201-2, and specifically can be determined by the method described in the EXAMPLES section below.

The density of the incombustible layer is preferably 0.1 g/cm³ to 4.0 g/cm³, more preferably 0.1 g/cm³ to 1.5 g/cm³, and further preferably 0.1 g/cm³ to 1.0 g/cm³. If the density is in the foregoing range, the thermal conductivity tends to be low and the heat transfer delay property tends to be high.

The organic substance contained in the incombustible layer according to this embodiment is, for example, a thermally carbonizable polymer that turns into carbon when fired, without being limited thereto

Examples of the thermally carbonizable polymer include acrylic-based resin such as polyacrylonitrile; phenolic resin; PBO-based resin such as polyparaphenylenebenzobisoxazole (PBO); aromatic polyamide (aramid)-based resin; epoxy resin; pitch-based fiber such as isotropic pitch and mesophase pitch; and cellulose. Of these, acrylic-based resin such as polyacrylonitrile is preferable.

The polyacrylonitrile resin, if in fiber form, turns into an oxidized/stabilized flameproof resin (fiber) as a result of being heat-treated at 200 °C to 400 °C in air, and thus is suitable as the organic substance contained in the incombustible layer according to this embodiment.

These organic substances may be used singly or in combination of two or more.

The organic substance may be a film or a sheet. The organic substance may be fibrous, and may be a nonwoven fabric, woven fabric, knitted fabric, unidirectionally arranged sheet, or the like made of fibers of the organic substance. Of these, a nonwoven fabric or woven fabric is preferable and a nonwoven fabric is more preferable because they have better thermal insulation and are easily integrated with other layers such as the foam layer and thus facilitate lamination.

In the case where the organic substance is a film or a sheet, its production method is not limited. For example, a known hot press method such as extrusion sheet molding, injection molding, and sheet forming using hot rolls may be used.

The incombustible layer according to this embodiment may contain a fiber-reinforced resin obtained by impregnating a fiber made of a non-metallic inorganic substance with a resin, and may be made of a fiber-reinforced resin. Non-limiting examples of the fiber made of the non-metallic inorganic substance include fibers made of glass, carbon, and ceramics.

These non-metallic inorganic substances may be used singly or in combination of two or more.

The fiber-reinforced resin obtained by impregnating a fiber made of a non-metallic inorganic substance with a resin may be a film or a sheet. The fiber of the non-metallic inorganic substance may be a nonwoven fabric, woven fabric, knitted fabric, unidirectionally arranged sheet, or the like. Of these, a nonwoven fabric or woven fabric is preferable because they have better thermal insulation and are easily integrated with other layers such as the foam layer and thus facilitate lamination.

As a result of the incombustible layer containing the fiber-reinforced resin, the strength and rigidity of the laminate are improved.

The resin with which the fiber made of the non-metallic inorganic substance is impregnated is, for example, a thermosetting resin or a thermoplastic resin, without being limited thereto.

Examples of the thermosetting resin include various thermosetting resins such as epoxy-based resin, unsaturated polyester-based resin, phenolic resin, and polyimide-based resin. These thermosetting resins may be used singly or in combination of two or more. The thermosetting resin may be mixed with rubber, thermoplastic resin, thermoplastic elastomer, etc. Of these, epoxy-based resin or a mixed resin containing epoxy-based resin is preferable.

Examples of the thermoplastic resin include polyolefin-based resin, polyester-based resin, polyamide-based resin, acrylic-based resin, polyoxymethylene-based resin, polycarbonate-based resin, polyphenylene ether-based resin, polystyrene-based resin, polyetherketone-based resin, polyetheretherketone-based resin, polyethersulfone-based resin, polyphenylenesulfide-based resin, and polyetherimide-based resin. These thermoplastic resins may be used singly or in combination of two or more. Of these thermoplastic resins, crystalline resin is preferable. Polyolefin-based resin, modified polyolefin-based resin, polyamide-based resin, and polyester-based resin are more preferable from the viewpoint of mechanical properties and versatility. Polyamide-based resin and polyester-based resin are further preferable from the viewpoint of thermal properties.

Of the foregoing organic substances and fiber-reinforced resins obtained by impregnating a fiber made of a non-metallic inorganic substance with a resin, a woven fabric or nonwoven fabric of an organic substance is preferable because it is easily integrated with other layers such as the foam layer and thus facilitates lamination, and a nonwoven fabric of acrylic-based resin such as polyacrylonitrile is particularly preferable because it has better flame resistance and thermal insulation and is less prone to changes in shape and properties after combustion.

### [[Foam layer]]

The flame-retardant foam layer included in the laminate according to this embodiment contains a foam, and has a flammability level measured based on the UL94 vertical flame test of V-2 to V-0.

The number of foam layers is not limited, and may be one layer or a plurality of layers. From the viewpoint of ease of production, the number of foam layers is preferably 3 layers or less, more preferably 2 layers or less, and further preferably 1 layer.

In the case where there are a plurality of foam layers, their compositions may be the same or different.

The thickness of each foam layer may be appropriately determined depending on the use of the laminate, but is preferably 1 mm to 20 mm, more preferably 1 mm to 15 mm, and further preferably 1 mm to 10 mm. The thickness of the foam layer (the total thickness in the case where there are a plurality of layers) is preferably 10 % to 99 %, more preferably 30 % to 99 %, and further preferably 50 % to 99 %, where the thickness of the laminate is 100 %. If the thickness of the foam layer is in the foregoing range, for example, the burning speed of the entire laminate can be reduced in the case where the laminate is used as the LIB cover. Such a laminate is excellent as a fire barrier.

The foam layer according to this embodiment has a flame retardance of V-2 to V-0, preferably has a flame retardance of V-1 to V-0, and more preferably has a flame retardance of V-0 in accordance with the UL94 standard.

As a result of the foam layer having high flame retardance, the laminate according to this embodiment can suppress the spread of combustion. In detail, for example in the case where the laminate is used for an LIB cover, when the temperature of the LIB increases suddenly due to overcharging, short circuit, or the like and the LIB undergoes thermal runaway and catches fire, the spread of combustion to the surroundings can be suppressed. Moreover, when a fire or the like occurs around the LIB, the spread of combustion to the inside of the cover (laminate) can be suppressed.

The flame retardance of the foam layer can be adjusted by adjusting the type of resin and the type and content of the flame retardant used together with the resin during the production of the foam.

Specifically, the flame retardance of the foam layer in accordance with the UL94 standard can be measured by the method described in the EXAMPLE section below.

The foam contained in the foam layer may be obtained by foaming a resin composition containing a base resin including a thermoplastic resin or a thermosetting resin and optionally further containing additives such as a flame retardant.

Examples of the foam include extruded foam, injection foam, bead foam (foam made of foam particles), stretched foam, and solvent-extracted foam, which are produced respectively by the below-described extrusion foaming method, injection foaming method, bead foaming method, stretch foaming method, and solvent extraction foaming method.

Of these, a bead foam is preferable because it has good formability, enables secondary processing of foam to be omitted by forming in advance, and contributes to higher heat transfer delay property (thermal insulation), higher mechanical strength, and easier cell diameter and distribution control due to its closed cell structure. When molding the bead foam, for example, if molding is performed in a state in which the incombustible layer containing a woven fabric or nonwoven fabric is placed in a mold in advance by the below-described method, the fiber of the incombustible layer enters the gaps between the bead foam particles to form an intermediate layer, so that the adhesion can be effectively improved without using an adhesive or the like. Moreover, in the case where the incombustible layer and the foam layer are directly laminated by the foregoing method, peeling at the interface is less likely to occur, so that the heat transfer delay property is improved. Further, for example, by overlaying the fiber-reinforced resin and the foam and heating them as in the method described in the EXAMPLES section below, the resin contained in the fiber-reinforced resin enters the gaps between the foam particles of the foam to form an intermediate layer, thus achieving the same effect as above.

While foams include a foam of a closed cell structure and a foam of an open cell structure, a foam of a closed cell structure has independent cells and therefore contributes to higher thermal insulation.

The content of the base resin is preferably 20 mass% or more, more preferably 40 mass% or more, further preferably 60 mass% or more, and particularly preferably 70 mass% or more, and preferably 100 % or less and more preferably 95 % or less with respect to 100 mass% of the resin composition.

Examples of the thermoplastic resin include polyphenylene ether-based resin, polystyrene-based resin, polyethylene-based resin, polyamide-based resin, polypropylene-based resin, ABS resin, vinyl chloride-based resin, acrylic-based resin, methyl methacrylate resin, nylon-based resin, fluorine-based resin, polycarbonate-based resin, polyurethane resin, and polyester-based resin, with polyphenylene ether-based resin, polystyrene-based resin, polyethylene-based resin, polyamide-based resin, polypropylene-based resin, acrylic-based resin, and polycarbonate-based resin being preferable from the viewpoint of heat resistance, economy, and foamability. In particular, a resin with low polarity or a resin with low density is preferable as the base resin of the foam according to the present disclosure, and examples thereof include polyethylene-based resin, polypropylene-based resin, polycarbonate-based resin, polystyrene-based resin, polyphenylene ether-based resin, and fluorine-based resin.

These may be used singly or in combination of two or more.

The polyphenylene ether (PPE)-based resin may be a polymer represented by the following general formula (1).

In formula (1), R¹, R², R³, and R⁴ each indicate, independently of one another, a hydrogen atom, a halogen atom, an alkyl group, an alkoxy group, a phenyl group, or a haloalkyl group or haloalkoxy group having at least two carbon atoms between a halogen and the benzene ring in general formula (1) and not including a tertiary α-carbon atom. Moreover, n in formula (1) is an integer that represents the degree of polymerization.

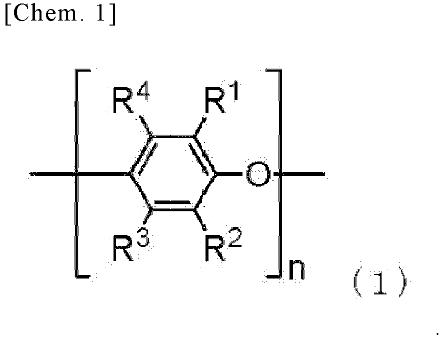

Examples of the polyphenylene ether-based resin include, but are not limited to, poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dibutyl-1,4-phenylene) ether, poly(2,6-dilauryl-1,4-phenylene) ether, poly(2,6-diphenyl-1,4-diphenylene) ether, poly(2,6-dimethoxy-1,4-phenylene) ether, poly(2,6-diethoxy-1,4-phenylene) ether, poly(2-methoxy-6-ethoxy-1,4-phenylene) ether, poly(2-ethyl-6-stearyloxy-1,4-phenylene) ether, poly(2,6-dichloro-1,4-phenylene) ether, poly(2-methyl-6-phenyl-1,4-phenylene) ether, poly(2,6-dibenzyl-1,4-phenylene) ether, poly(2-ethoxy-1,4-phenylene) ether, poly(2-chloro-1,4-phenylene) ether, and poly(2,6-dibromo-1,4-phenylene) ether. Of these polyphenylene ether-based resins, those for which R¹ and R² are each an alkyl group having a carbon number of 1 to 4 and R³ and R⁴ are each a hydrogen or an alkyl group having a carbon number of 1 to 4, in particular, are preferable.

These may be used singly or in combination of two or more.

The content of the polyphenylene ether-based resin in this embodiment is preferably 20 mass% to 80 mass%, more preferably 30 mass% to 70 mass%, and even more preferably 35 mass% to 60 mass% with respect to 100 mass% of the base resin. Excellent heat resistance and flame retardance are easier to obtain when the content of the PPE-based resin is 20 mass% or more, whereas excellent processability is easier to obtain when the content of the PPE-based resin is 80 mass% or less.

The weight-average molecular weight (Mw) of the polyphenylene ether-based resin is preferably 20,000 to 60,000.

The weight-average molecular weight (Mw) is the weight-average molecular weight that is determined by performing measurement of the resin by gel permeation chromatography (GPC) and determining the molecular weight of a peak in the chromatogram using a calibration curve that has been determined through measurement of commercially available standard polystyrenes (i.e. prepared using peak molecular weights of the standard polystyrenes).

The polystyrene-based resin is a homopolymer of styrene or a styrene derivative or a copolymer having styrene or a styrene derivative as a main component (component contained in a proportion of 50 mass% or more in the polystyrene-based resin).

Examples of the styrene derivative include o-methylstyrene, m-methylstyrene, p-methylstyrene, t-butylstyrene, α-methylstyrene, β-methylstyrene, diphenylethylene, chlorostyrene, and bromostyrene.

Examples of the polystyrene-based resin that is a homopolymer include polystyrene, poly(α-methylstyrene), and polychlorostyrene.

Examples of the polystyrene-based resin that is a copolymer include binary copolymers such as styrene-butadiene copolymer, styrene-acrylonitrile copolymer, styrene-maleic acid copolymer, styrene-maleic anhydride copolymer, styrene-maleimide copolymer, styrene-N-phenylmaleimide copolymer, styrene-N-alkylmaleimide copolymer, styrene-N-alkyl-substituted phenylmaleimide copolymer, styrene-acrylic acid copolymer, styrene-methacrylic acid copolymer, styrene-methyl acrylate copolymer, styrene-methyl methacrylate copolymer, styrene-n-alkyl acrylate copolymer, styrene-N-alkyl methacrylate copolymer, and ethyl vinyl benzene-divinylbenzene copolymer; tertiary copolymers such as ABS and butadiene-acrylonitrile-α-methylbenzene copolymer; and graft copolymers such as styrene-grafted polyethylene, styrene-grafted ethylene-vinyl acetate copolymer, (styrene-acrylic acid)-grafted polyethylene, and styrene-grafted polyamide.

These may be used singly or in combination of two or more.

The polyethylene-based resin may be a resin of high-density polyethylene, low-density polyethylene, linear low-density polyethylene, copolymer of ethylene and an α-olefin, propylene-ethylene copolymer, or the like.

These may be used singly or in combination of two or more.

These polyethylene-based resins may have a structure that is suitably cross-linked through a cross-linker or the like.

The polyamide-based resin may be a polyamide, a polyamide copolymer, or a mixture thereof, for example. The polyamide-based resin may include a polymer obtained through self-condensation of an aminocarboxylic acid, ring-opening polymerization of a lactam, or polycondensation of a diamine and a dicarboxylic acid.

The polyamide may be nylon 66, nylon 610, nylon 612, nylon 46, nylon 1212, or the like that is obtained through polycondensation of a diamine and a dicarboxylic acid, or may be nylon 6, nylon 12, or the like that is obtained through ring-opening polymerization of a lactam.

The polyamide copolymer may be nylon 6/66, nylon 66/6, nylon 66/610, nylon 66/612, nylon 66/6T (T represents a terephthalic acid component), nylon 66/6I (I represents an isophthalic acid component), nylon 6T/6I, or the like, for example.

The mixture of any of these polymers may be a mixture of nylon 66 and nylon 6, a mixture of nylon 66 and nylon 612, a mixture of nylon 66 and nylon 610, a mixture of nylon 66 and nylon 6I, a mixture of nylon 66 and nylon 6T, or the like, for example.

These may be used singly or in combination of two or more.

The content of the thermoplastic resin other than PPE-based resin in this embodiment is preferably 10 mass% to 100 mass% and more preferably 20 mass% to 80 mass% with respect to 100 mass% of the base resin from the viewpoint of the processability of the foam.

Examples of the thermosetting resin include phenolic resin, epoxy resin, unsaturated polyester resin, polyurethane, and melamine resin, with phenolic resin or melamine resin being preferable.

These may be used singly or in combination of two or more.

Examples of additives that may be used include flame retardants, flame retardant synergists, heat stabilizers, antioxidants, antistatic agents, inorganic fillers, anti-dripping agents, ultraviolet absorbers, light absorbers, plasticizers, mold release agents, dyes/pigments, rubber components, and resins other than the base resin, and these additives may be added to the extent that the effects disclosed herein are not lost.

The content of additives when the base resin is taken to be 100 parts by mass is preferably 0 parts by mass to 40 parts by mass, and more preferably 5 parts by mass to 30 parts by mass.

Examples of flame retardants that may be used include organic flame retardants and inorganic flame retardants without any specific limitations.

Examples of organic flame retardants include halogenated compounds, representative examples of which are bromine compounds, and non-halogenated compounds, representative examples of which are phosphorus-based compounds and silicone-based compounds.

Examples of inorganic flame retardants include metal hydroxides, representative examples of which are aluminum hydroxide and magnesium hydroxide, and antimony-based compounds, representative examples of which are antimony trioxide and antimony pentoxide.

These may be used singly or in combination of two or more.

Of these flame retardants, non-halogenated flame retardants that are organic flame retardants are preferable from an environmental perspective, with phosphorus-based flame retardants and silicone-based flame retardants being more preferable.

A flame retardant that includes phosphorus or a phosphorus compound can be used as a phosphorus-based flame retardant. The phosphorus may be red phosphorus. The phosphorus compound may be a phosphate ester, a phosphazene compound having a bond between a phosphorus atom and a nitrogen atom in a main chain thereof, or the like.

Examples of phosphate esters that may be used include trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, cresyl diphenyl phosphate, dicresyl phenyl phosphate, dimethyl ethyl phosphate, methyl dibutyl phosphate, ethyl dipropyl phosphate, hydroxyphenyl diphenyl phosphate, and resorcinol bis(diphenyl phosphate). Moreover, phosphate ester compounds of a type obtained through modification of any of the preceding examples with any of various substituents and various condensation-type phosphate ester compounds may be used.

Of these examples, triphenyl phosphate and condensation-type phosphate ester compounds are preferable from the viewpoint of heat resistance, flame retardance, and foaming properties.

These may be used singly or in combination of two or more.

The silicone-based flame retardant may be a (mono or poly)organosiloxane.

Examples of (mono or poly)organosiloxanes include monoorganosiloxanes such as dimethylsiloxane and phenylmethylsiloxane; polydimethylsiloxane and polyphenylmethylsiloxane that are obtained through polymerization of these monoorganosiloxanes; and organopolysiloxanes such as copolymers of these monoorganosiloxanes.

In the case of an organopolysiloxane, a bonding group of a main chain or branched side chain thereof may be a hydrogen, an alkyl group, or a phenyl group, and is preferably a phenyl group, a methyl group, an ethyl group, or a propyl group, but is not limited thereto. Moreover, a terminal bonding group may be a hydroxy group, an alkoxy group, an alkyl group, or a phenyl group. The form of the silicone may be any form such as an oil form, gum form, varnish form, powder form, or pellet form without any specific limitations.

These may be used singly or in combination of two or more.

The content of the flame retardant may be set within the range for content of an additive, and, when the base resin is taken to be 100 parts by mass, is preferably 0 parts by mass to 30 parts by mass, and more preferably 5 parts by mass to 25 parts by mass. The effect of improving the flame retardance of the foam is more likely to be achieved when the content of the flame retardant is higher.

Examples of rubber components that may be used include butadiene, isoprene, 1,3-pentadiene, and the like, but are not limited thereto. Such a rubber component is preferably a component that is dispersed in a particulate form in a continuous phase formed of a polystyrene-based resin. The method by which any of these rubber components is added may be by adding the rubber component itself or by using a resin such as a styrene-based elastomer or a styrene-butadiene copolymer as a rubber component supply source.

In the case where a rubber component is added, the content of the rubber component may be set within the range for the content of an additive, and, when the base resin is taken to be 100 parts by mass, is preferably 0.3 parts by mass to 15 parts by mass, more preferably 0.5 parts by mass to 8 parts by mass, and even more preferably 1 part by mass to 5 parts by mass. When the content is 0.3 parts by mass or more, it is easy to obtain a foam having excellent resin flexibility and extension, a low tendency for foam cell membranes to rupture during foaming, and excellent shaping processability and mechanical strength.

In this embodiment, although adding a larger amount of flame retardant to the resin composition is preferable for improving the flame retardance of the foam, increasing the additive amount of the flame retardant has a negative influence on foaming properties. In such a situation, a rubber component may suitably be used in order to impart foaming properties to the resin composition. In particular, the rubber component described above is important in bead foaming in which the temperature is gradually increased from normal temperature and in which a resin is foamed in a non-molten state.

### (Foam production method)

The foam production method according to this embodiment is not limited, and examples thereof include an extrusion foaming method, an injection foaming method, a bead foaming method (in-mold foaming method), a stretch foaming method, and a solvent extraction foaming method.

The extrusion foaming method is a method of obtaining a plate-shaped, sheet-shaped, or columnar foam having a certain cross-sectional shape by pressing an organic or inorganic blowing agent into a resin in a molten state using an extruder and releasing the pressure at the exit of the extruder.

The injection foaming method is a method of obtaining a foam with pores by injection molding a foamable resin and foaming it in a mold.

The bead foaming method (in-mold foaming method) is a method of obtaining a foam by loading foam particles into a mold and heating the foam particles with steam or the like so as to cause expansion of the foam particles and simultaneously cause thermal fusion of the foam particles to one another.

The stretch foaming method is a method of obtaining a foam by kneading additives such as fillers into a resin in advance and stretching the resin to generate microvoids.

The solvent extraction foaming method is a method of obtaining a foam by adding additives that dissolve in a predetermined solvent to a resin and immersing a molded product in the predetermined solvent to extract the additives.

In the case of extrusion foaming, the obtained foam is plate-shaped, sheet-shaped, or the like, and thus a punching step of cutting the foam to a desired shape and a thermal bonding step of bonding the cut-out parts are required in order to process the foam.

In the case of bead foaming, on the other hand, it is easy to shape a foam into a finer shape or a more complex shape because a mold of a desired shape is produced and foam particles are loaded into the mold and shaped.

Although shaping of a foam into a complex shape is also possible with injection foaming, with bead foaming it is easier to increase the expansion ratio of the foam and achieve not only thermal insulation but also flexibility.

A typically used gas can be used as a blowing agent without any specific limitations.

Examples of blowing agents that may be used include inorganic gases such as air, carbon dioxide gas, nitrogen gas, oxygen gas, ammonia gas, hydrogen gas, argon gas, helium gas, and neon gas; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; saturated hydrocarbons such as propane, n-butane, i-butane, n-pentane, i-pentane, and neopentane; ethers such as dimethyl ether, diethyl ether, methyl ethyl ether, isopropyl ether, n-butyl ether, diisopropyl ether, furan, furfural, 2-methylfuran, tetrahydrofuran, and tetrahydropyran; ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone, and ethyl n-butyl ketone; alcohols such as methanol, ethanol, propyl alcohol, i-propyl alcohol, butyl alcohol, i-butyl alcohol, and t-butyl alcohol; carboxylic acid esters such as formic acid methyl ester, formic acid ethyl ester, formic acid propyl ester, formic acid butyl ester, formic acid amyl ester, propionic acid methyl ester, and propionic acid ethyl ester; and chlorinated hydrocarbons such as methyl chloride and ethyl chloride.

These may be used singly or in combination of two or more.

The blowing agent preferably displays little or no combustibility or combustion support from the viewpoint of flame retardance, and is more preferably an inorganic gas from the viewpoint of gas safety. An inorganic gas has a low tendency to dissolve in a resin compared to an organic gas such as a hydrocarbon and can easily escape from a resin after a foaming step or shaping step, which is beneficial in providing better dimensional stability over time of the foam after shaping. Moreover, in a situation in which an inorganic gas is used, this has a benefit that plasticization of a resin due to residual gas tends not to occur and that excellent heat resistance can be displayed at an earlier stage without going through a step of aging or the like. Of inorganic gases, carbon dioxide gas is preferable from viewpoint of solubility in a resin and ease of handling. Hydrocarbon-based organic gases generally have high combustibility and tend to cause poorer flame retardance when they remain in a foam.

The foam according to this embodiment is preferably produced by the bead foaming method, and is preferably made of foam particles.

Shaping the foam using the bead foaming method can improve the formability of the foam.

The foam particles used in the bead foaming method can be obtained by causing the base resin to contain (i.e. to be impregnated with) a blowing agent and causing foaming to occur. Specifically, according to the method described in Example 1 in JP H4-372630 A, the foam particles may be produced by loading the base resin (pellet-shaped, bead-shaped, etc.) into a pressure-resistant vessel, replacing gas inside the vessel with dry air, then injecting a blowing agent (gas) so that the base resin will be impregnated with the blowing agent (gas), and then releasing the pressure and transferring the base resin pellets from the pressure-resistant vessel to a foaming furnace where they are heated and foamed through pressurized steam while rotating an impeller.

Although the conditions under which the base resin is impregnated with the blowing agent (gas) are not limited, for example, an impregnation pressure of 0.3 MPa to 30 MPa, an impregnation temperature of -20 °C to 100 °C, and an impregnation time of 10 minutes to 96 hours are preferable from the viewpoint of impregnating the base resin with the blowing agent (gas) more efficiently. The maximum vapor pressure of pressurized steam inside the foaming furnace is preferably 30 kPa·G to 700 kPa·G from the viewpoint of more easily obtaining the desired expansion ratio and achieving better appearance.

In the method of producing the foam particles, the time from the completion of pressure release (release of impregnation pressure) in the pressure-resistant vessel to the start of heating with pressurized steam in the foaming furnace is preferably less than 600 seconds, more preferably 300 seconds or less, further preferably 120 seconds or less, and particularly preferably 60 seconds or less. If the time is in the foregoing range, it is possible to suppress uneven diffusion of the gas with which the base resin is impregnated, so that the cell diameter can be made uniform and an increase of the cell diameter can be prevented.

The method by which a foam is shaped using the foam particles is not limited and may, for example, be a method in which the foam particles are loaded into a cavity of a shaping mold, are heated so as to cause expansion and, simultaneously thereto, thermal fusion of the foam particles to one another, and then cooling is performed to solidify the product and perform shaping. A commonly known method can be adopted as the loading method of the foam particles without any specific limitations.

The foam particles are preferably subjected to pressurization treatment with a gas prior to being loaded into the cavity of the shaping mold. By providing a fixed gas pressure inside cells of the foam particles, it is possible to cause strong fusion of constituent foam particles of the resultant foam and to enhance the rigidity and appearance of a molded article. The gas used in the pressurization treatment is not limited but is preferably air and an inorganic gas from the viewpoint of ease of handling and economy. The method of pressurization treatment is not limited and may be a method in which the foam particles are loaded into a pressurization vessel, pressurized gas is introduced, and the gas is supplied to inside of the pressurization vessel by increasing the pressure to a maximum pressure of 0.1 MPa to 20 MPa over 10 minutes to 96 hours.

The method of heating during shaping of the foam particles may be heating using a heating medium such as steam, heating by a heater such as an IR heater, heating using microwaves, or the like. In the case of heating using a heating medium, a general purpose heating medium may be used, with steam being preferable from the viewpoint of efficiently heating the resin.

The method by which the foam is processed into a desired shape in this embodiment is not limited, and may be a method in which foam particles or a molten resin is loaded into a mold and is shaped, a method in which the foam is cut by a blade such as a saw blade or die-cutting blade, a method in which machining is performed by a mill, or a method in which a plurality of foams are adhered through heating.

The expansion ratio of the foam is preferably 3 cm³/g to 100 cm³/g, more preferably 3 cm³/g to 30 cm³/g, and further preferably 3 cm³/g to 20 cm³/g from the viewpoint of enhancing the strength and the heat transfer delay property.

The expansion ratio of the foam is the value (V/W) obtained by dividing the volume V [cm³] of the foam by the mass W [g] of the foam.

### [[Intermediate layer]]

The laminate according to this embodiment may include an intermediate layer in which the component of the incombustible layer and the component of the foam layer are mixed, between the incombustible layer and the foam layer.

The presence of the intermediate layer improves the adhesion between the incombustible layer and the foam layer. Hence, the laminate has excellent strength and resists peeling at the interface when heated by direct fire or the like, and thus has higher heat transfer delay property.

In a cross section of the laminate in the lamination direction, the region sandwiched between a straight line passing through the component of the foam layer closest to the incombustible layer and extending in the direction perpendicular to the lamination direction and a straight line passing through the component of the incombustible layer closest to the foam layer and extending in the direction perpendicular to the lamination direction is defined as the range of the intermediate layer.

The number of intermediate layers is not limited, and may be one layer or a plurality of layers depending on the number of incombustible layers and the number of foam layers.

In the case where there are a plurality of intermediate layers, their compositions may be the same or different depending on the composition of the incombustible layer and the composition of the foam layer.

The thickness of each intermediate layer may be appropriately determined depending on the use of the laminate, but is preferably 0.01 mm to 5 mm, more preferably 0.01 mm to 3 mm, and further preferably 0.1 mm to 3 mm. The thickness of the intermediate layer (the total thickness in the case where there are a plurality of layers) is preferably 0.1 % to 30 %, more preferably 0.1 % to 20 %, and further preferably 0.1 % to 10 %, where the thickness of the laminate is 100 %. If the thickness of the intermediate layer is in the foregoing range, for example in the case where the laminate is used as the LIB cover, the laminate has excellent strength and heat transfer delay property and thus is excellent as a fire barrier.

The volume ratio of the component of the incombustible layer and the component of the foam layer ((incombustible layer component):(foam layer component)) in the intermediate layer is preferably 1:200 to 1:0.005, more preferably 1:200 to 1:1, and further preferably 1:100 to 1:1. If the volume ratio is in the foregoing range, the heat transfer delay property can be effectively enhanced.

The volume ratio can be calculated as the area ratio of the component of the incombustible layer and the component of the foam layer ((incombustible layer component):(foam layer component)) in the cross section of the intermediate layer in the lamination direction, and specifically can be calculated by the method described in the EXAMPLES section below.

The intermediate layer can be formed between the incombustible layer and the foam layer, for example, by a method that involves placing the material of the incombustible layer and the material of the foam layer (foam particles, foamable resin, etc.) in a mold and heating them to form the incombustible layer and the foam layer and simultaneously bond the two layers, a method that involves heating the surface of the incombustible layer (the surface to which the foam layer is adhered) and the surface of the foam layer (the surface to which the incombustible layer is adhered) and bonding the two layers, or a method that involves overlaying the incombustible layer and the foam layer and heating them from the incombustible layer side.

### [[Metal layer]]

The laminate according to this embodiment may further include a metal layer containing metal. Since a metal layer typically has low emissivity, heat transfer due to radiation from flames in the event of a fire, etc. can be effectively eliminated and the heat transfer delay property can be enhanced. Therefore, the metal layer is preferably located on the side closer to the heat source than the foam layer. More preferably, the incombustible layer, the metal layer, and the foam layer are laminated in this order because, even when the laminate is exposed to flames, the direct fire is kept from coming into contact with the metal layer and accordingly the metal layer is prevented from deformation, etc., with it being possible to effectively enhance the heat transfer delay property.

The metal layer is preferably a metal plate made only of metal.

The number of metal layers is not limited, and may be one layer or a plurality of layers. The number of metal layers is preferably 3 layers or less, more preferably 2 layers or less, and further preferably 1 layer from the viewpoint of enhancing the strength and the heat transfer delay property.

In the case where there are a plurality of metal layers, their compositions may be the same or different.

The thickness of each metal layer is preferably 0.01 mm to 3 mm, more preferably 0.1 mm to 2mm, and further preferably 0.1 mm to 1 mm. The thickness of the metal layer (the total thickness in the case where there are a plurality of layers) is preferably 0.1 % to 50 %, more preferably 0.1 % to 30 %, and further preferably 0.1 % to 10 %, where the thickness of the laminate is 100 %. If the thickness of the metal layer is in the foregoing range, the laminate has excellent heat transfer delay property.

Examples of the metal contained in the metal layer include aluminum, iron, copper, stainless steel, titanium, aluminum-zinc alloy plated steel plate, enamel steel plate, clad steel plate, laminated steel plate (vinyl chloride steel plate, etc.), and sandwich steel plate (laminated damping steel plate, etc.). These metals may be used singly or in combination of two or more.

### [[Adhesive layer]]

The laminate according to this embodiment may further include an adhesive layer containing a gluing agent/adhesive for bonding the incombustible layer, the foam layer, and optionally the metal layer.

As the gluing agent/adhesive, for example, a pressure-sensitive gluing agent/adhesive, a gluing agent/adhesive curable by heat, ultraviolet rays, or the like, or a gluing agent/adhesive that is applied in a molten state and solidified by cooling may be appropriately used. Examples of the resin used for the gluing agent/adhesive include acrylic resin, vinyl acetate resin, nitrile rubber resin, styrene-butadiene rubber, chloroprene rubber, starch, epoxy resin, cyanoacrylate resin, and silicone rubber.

The thickness of the adhesive layer is not limited, but is preferably 0.01 mm to 3 mm, more preferably 0.01 mm to 1 mm, and further preferably 0.01 mm to 0.5 mm from the viewpoint of reducing its influence on the heat transfer delay property of the laminate.

### [Laminate production method]

The laminate production method according to this embodiment is not limited. An example is a method that involves bonding each layer with heat or a gluing agent/adhesive. In the case where the incombustible layer and the foam layer are bonded by heat, the intermediate layer is formed between the incombustible layer and the foam layer.

For the bonding of the incombustible layer and the foam layer, a method may be used that involves placing the material of the incombustible layer and the material of the foam layer (foam particles, foamable resin, etc.) in a mold and heating them to form the incombustible layer and the foam layer and simultaneously bond the two layers. In this case, the adhesion is improved as a result of the intermediate layer being formed between the incombustible layer and the foam layer.

To improve the joining strength of the metal layer with other layers, the surface of the metal of the metal layer may be subjected to chemical treatment, laser treatment, etc.

### EXAMPLES

The presently disclosed techniques will be described in more detail below by way of examples, although the present disclosure is not limited to these examples.

The evaluation methods used in Examples and Comparative Examples are as follows.

### (1) Oxygen index of incombustible layer

With reference to the production method for the incombustible layer in each of Examples and Comparative Examples, a test piece type IV (150 mm in length, 6.5 mm in width, and thickness shown in Table 1) defined in JIS K7201-2 was prepared, and the oxygen index was determined using a combustion tester (Candle Type Flammability Tester AC2 manufactured by Toyo Seiki Seisakusho, Ltd.).

In Example 2, Comparative Example 2, and Comparative Example 6, a plurality of aramid sheets, a plurality of combustible nonwoven fabrics, and a plurality of PAN nonwoven fabrics were respectively laminated to form the incombustible layer as described later, but the oxygen index was measured for a single layer (one layer) in each case. While the oxygen index is higher in the case of lamination of a plurality of layers than in the case of a single layer (one layer), the oxygen index in Comparative Example 2 was less than 25 even though three combustible nonwoven fabrics were laminated.

### (2) Flame retardance of foam layer

The foam layer in each of Examples and Comparative Examples was subjected to a test in accordance with the UL-94 vertical method (20 mm vertical flame test) of the UL standard (United States of America) so as to evaluate flame retardance.

The measurement method will be described in detail below.

Five test pieces of 125 mm in length, 13 mm in width, and 5 mm in thickness that had been cut out from the foam layer were used. Each test piece was vertically attached to a clamp, a 20 mm flame was twice applied to the test piece for 10 seconds, and a judgment of V-0, V-1, or V-2 was made based on the burning behavior.
V-0: Flame burning time of both first and second applications was 10 seconds or less, total flame burning time and flameless burning time for second application was 30 seconds or less, total flame burning time for 5 test pieces was 50 seconds or less, no samples burn up to position of fixing clamp, and no catching fire of cotton due to burning drippings
V-1: Flame burning time of both first and second applications was 30 seconds or less, total flame burning time and flameless burning time for second application was 60 seconds or less, total flame burning time for 5 test pieces was 250 seconds or less, no samples burn up to position of fixing clamp, and no catching fire of cotton due to burning drippings
V-2: Flame burning time of both first and second applications was 30 seconds or less, total flame burning time and flameless burning time for second application was 60 seconds or less, total flame burning time for 5 test pieces was 250 seconds or less, and no samples burn up to position of fixing clamp, but catching fire of cotton occurred due to burning drippings

Note that a judgment of "non-conforming (×)" was made in cases that did not correspond to any of V-0, V-1, and V-2.

### (3) Volume ratio of component of incombustible layer and component of foam layer in intermediate layer

The laminate obtained in each Example was cut with a cutter, and a cross section of the intermediate layer in the lamination direction was observed using 3D Real Surface View Microscope VE-9800 manufactured by Keyence Corporation. The area occupied by the component of the incombustible layer and the area occupied by the component of the foam layer were measured and averaged for three cross sections. The area ratio ((incombustible layer component):(foam layer component)) was calculated from the obtained average values to determine the volume ratio ((incombustible layer component):(foam layer component)) of the components in the intermediate layer.

### (4) Density of incombustible layer

The mass W [g] of the incombustible layer in each of Examples and Comparative Examples was measured and divided by the volume V [cm³] of the incombustible layer to calculate the density (g/cm³).

### (5) Apparent density of laminate

The mass W [g] of the laminate obtained in each of Examples and Comparative Examples was measured and divided by the volume V [cm³] of the laminate to calculate the apparent density (g/cm³).

### (6) Direct fire combustion test for laminate

With reference to the method of preparing the laminate obtained in each of Examples and Comparative Examples, a test piece (100 mm in length, 100 mm in width, thickness shown in Table 1) was prepared, and the test piece was held horizontally with the surface on the first layer side facing down. The surface on the first layer side as a flame contact surface was brought into direct contact with a flame using a gas burner (output 1 kW), and the position of the gas burner was adjusted so that the temperature of the flame on the surface of the first layer would be about 960 °C. A thermocouple was installed on the surface opposite to the flame contact surface to measure the temperature change. The time taken for the measured temperature to exceed 200 °C was determined. The test time was 300 seconds.

As observation items, "flaming" indicates that flaming on the sample was observed during the combustion test, and "large deformation" indicates that the sample was greatly deformed (at least one of: the thickness of the flame contact part changed by 2 cm or more from the initial state; the sample broke completely and split into a plurality of pieces; and a hole with a diameter of 2 cm or more opened up in the foam layer or incombustible layer).

Based on the time until 200 °C was exceeded and the observation results, the heat transfer delay property was evaluated according to the following evaluation criteria:
⊚ (excellent): The time until 200 °C was exceeded was 150 seconds or more.
O (good): The time until 200 °C was exceeded was 50 seconds or more and less than 150 seconds, and neither flaming nor large deformation was observed.
X (poor): The time until 200 °C was exceeded was 50 seconds or more and less than 150 seconds and flaming and/or large deformation was observed, or the time until 200 °C was exceeded was less than 50 seconds.

The materials of the layers used in Examples and Comparative Examples are as follows.

### [Incombustible layer]

### (1) PAN nonwoven fabric

Lastan Nonwoven Fabric TOP8150Z manufactured by Asahi Kasei Advance Corporation with an oxygen index of 57, a thickness of 2.5 mm, and a density of 0.1 g/cm³ was used. (2) Aramid sheet

An aramid sheet (Nomex type 410 paper) manufactured by DuPont Teijin Advanced Paper Co., Ltd. with an oxygen index of 30, a thickness of 0.25 mm, and a density of 0.8 g/cm³ was used.

### [Foam layer]

### (1) Foam 1

After adding together 60 mass% of S201A (manufactured by Asahi Kasei Corporation) as a polyphenylene ether-based resin (PPE), 15 mass% of bisphenol A bis(diphenyl phosphate) (BBP) as a non-halogenated flame retardant, 10 mass% of high-impact polystyrene resin (HIPS) having a rubber concentration of 6 mass%, and 15 mass% of GP685 (manufactured by PS Japan Corporation) as a general purpose polystyrene resin (PS), these materials were subjected to hot melt-kneading in an extruder and were subsequently extruded so as to produce base resin pellets.

According to the method described in Example 1 of JP H4-372630 A, the base resin pellets were loaded into a pressure-resistant vessel, gas inside the vessel was purged with dry air, carbon dioxide (gas) was subsequently injected as a blowing agent, the base resin pellets were impregnated with carbon dioxide for 3 hours under conditions of a pressure of 3.0 MPa and a temperature of 10 °C, and then the base resin pellets were removed from the pressure-resistant vessel and were immediately transferred to a foaming furnace where base resin pellets were subjected to foaming through steam pressurized to a maximum of 330 kPa·G while rotating an impeller at 77 rpm so as to obtain foam particles.

The hydrocarbon gas content in the foam particles straight after foaming was measured by gas chromatography but was below the limit of detection (0.01 mass%).

Thereafter, the foam particles were loaded into a vessel and were subjected to pressurization treatment by introducing pressurized air into the vessel (pressure increased to 0.4 MPa over 4 hours and then held at 0.4 MPa for 16 hours). The resultant was loaded into a mold for in-mold shaping having steam holes and was heated by steam so as to cause expansion and fusion of the foam particles to one another. Thereafter, cooling was performed, and the resultant product was removed from the shaping mold to obtain foam 1 formed of foam particles (expansion ratio: 10 cm³/g, flammability level: V-0, closed cell structure).

### (2) Foam 2

Basotect W manufactured by Inoac Corporation (expansion ratio: 110 cm³/g, flame retardance level: V-0, open cell structure) was used. Foam 2 was a sheet-shaped foam, and required secondary processing such as cutting in order to obtain a desired shape.

### [Metal layer]

### (1) Aluminum plate

An aluminum plate (thickness: 1 mm) made of aluminum (material: A5052) was used.

### [Adhesive layer]

### (1) Adhesive

SX720WH manufactured by Cemedine Co., Ltd. was applied between the other layers with the thickness shown in Table 1.

### [Other layers]

### (1) Combustible nonwoven fabric

Promente Cloth WKX manufactured by Meisei Sansho Co., Ltd. with an oxygen index of less than 25 and a thickness of 0.35 mm was used.

### (2) Foam 3

A bead foam using Eperan PP manufactured by Kaneka Corporation (expansion ratio: 15 cm³/g, flame retardance level: non-conforming, closed cell structure) was used.

### (Example 1)

The laminate shown in Table 1 was obtained by changing the process of producing foam 1 from the foam particles as follows.

The obtained laminate was a laminate of a PAN nonwoven fabric (100 mm × 100 mm, 2.5 mm in thickness) as an incombustible layer and foam 1 (100 mm × 100 mm, 9 mm in thickness) as a foam layer. The obtained laminate had an intermediate layer (1 mm in thickness). As a result of the fibers of the PAN nonwoven fabric entering between the beads foam particles of foam 1 in the intermediate layer, the two layers were firmly fixed even without an adhesive. No preliminary process such as bonding by an adhesive was required for lamination, and the productivity was high.

Table 1 shows the measurement results of the physical properties of the obtained laminate.

### Laminate production method:

The foam particles described in relation to the production method for foam 1 were placed in a vessel, and pressurized air was introduced (the pressure was increased to 0.4 MPa over 4 hours, and then held at 0.4 MPa for 16 hours) to perform pressurization treatment. The foam particles subjected to the pressurization treatment were then charged into a mold for in-mold shaping having steam holes and having a PAN nonwoven fabric fixed thereto with double-sided tape along the wall surface, heated with steam to expand and fuse with each other, and then cooled and removed from the mold to obtain a laminate of the PAN nonwoven fabric and foam 1.

### (Examples 2, 3, and 5, Comparative Examples 1 to 3)

After preparing the material of each layer as shown in Table 1, an adhesive was used to bond an incombustible layer (first layer) and a foam layer (third layer) to obtain a laminate.

In Example 2 and Comparative Example 2, the first layer was formed by laminating a plurality of aramid sheets and a plurality of combustible nonwoven fabrics respectively. Here, bonding was performed using an adhesive (0.01 mm in thickness).

Table 1 shows the measurement results of the physical properties of each obtained laminate.

### (Example 4)

The laminate shown in Table 1 was produced as follows.

Table 1 shows the measurement results of the physical properties of the obtained laminate.

### Laminate production method:

Cloth prepreg composed of a carbon fiber with a tensile modulus of 250 GPa and an epoxy resin with a curing temperature of 80 °C and having a fiber basis weight of 200 g/m² and a carbon fiber content of 60 mass% was prepared as eight sheets of skin material (material of incombustible layer).

Subsequently, using foam 1 of 5 mm in thickness prepared separately as core material (material of foam layer), four sheets of skin material were laminated on each of the upper and lower surfaces of the core material. Following this, the laminated material was held at 90 °C for 3 minutes without applying pressure, and then held for 15 minutes while applying a surface pressure of 0.4 MPa to obtain a laminate. Observation of the obtained laminate revealed that part of the resin contained in the fiber-reinforced resin layer as the incombustible layer entered the gaps between the foam particles of foam 1 (bead foam) to form an intermediate layer and thus the incombustible layer and the foam layer were firmly adhered.

### (Example 6)

After preparing the material of each layer as shown in Table 1, aluminum foil (0.1 mm in thickness) was placed between an incombustible layer (first layer) and a foam layer (fifth layer), and they were bonded with an adhesive to obtain a laminate.

Table 1 shows the measurement results of the physical properties of the obtained laminate.

### (Comparative Examples 4 to 6)

A monolayer body was obtained using the material shown in Table 1.

Table 1 shows the measurement results of the physical properties of each obtained monolayer.

**[Table 1]**

| [Table 1] | | | | | | | | | | | | | | |
|---|---|---|---|---|---|---|---|---|---|---|---|---|---|---|
| | | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
| First layer | Material | - | PAN nonwoven fabric | Aramid sheet x4 | PAN nonwoven fabric | CFRP +epoxy resin | PAN nonwoven fabric | PAN nonwoven fabric | PAN nonwoven fabric | Combustible nonwoven fabric x3 | Aluminum plate | Foam 1 | Aluminum plate | PAN nonwoven fabric x4 |
| | Oxygen index | | 57 | 30 | 57 | 33 | 57 | 57 | 57 | less than 25 | | | | 57 |
| | Thickness | mm | 2.5 | 0.25×4 +adhesive 0.01×3 | 2.5 | 1.6 | 2.5 | 2.5 | 2.5 | 0.35x3 +adhesive 0.01x2 | 1 | 10 | 1 | 2.5×4 |
| Second layer | Material | - | (Intermediate layer) | Adhesive | Adhesive | (Intermediate layer) | Adhesive | Adhesive | Adhesive | Adhesive | Adhesive | - | - | - |
| | Thickness | mm | 1 | 0.01 | 0.01 | 0.1 | 0.01 | 0.01 | 0.01 | 0.01 | 001 | - | - | - |
| | Volume ratio in intermediate layer (incombustible layer component: foam layer component) | - | 595 | - | - | 1090 | - | - | - | - | - | - | - | - |
| Third layer | Material | - | Foam 1 | Foam 1 | Foam 2 | Foam 1 | Foam 1 | Aluminum foil | Foam 3 | Foam 1 | Foam 1 | - | - | - |
| | Thickness | mm | 9 | 10 | 10 | 5 | 10 | 0.1 | 10 | 10 | 10 | - | - | - |
| Fourth layer | Material | - | - | - | - | (Intermediate layer) | - | Adhesive | - | - | - | - | - | - |
| | Thickness | mm | - | - | - | 0.1 | - | 0.01 | - | - | - | - | - | - |
| | Volume ratio in intermediate layer (incombustible layer component:foam layer component) | - | - | - | - | 1090 | - | - | - | - | - | - | - | - |
| Fifth layer | Material | - | - | - | - | CFRP +epoxy resin | - | Foam 1 | - | - | - | - | - | - |
| | Thickness | mm | - | - | - | 1.6 | - | 12 | - | - | - | - | - | - |
| Apparent density of laminate | | g/cm3 | 0.09 | 0.17 | 0.02 | 0.38 | 0.09 | 0.11 | 0.07 | 0.14 | 0.37 | 0.10 | 2.70 | 0.06 |
| Heat transfer delay property | Time to exceed 200°C | sec | 200 | 270 | 100 | 300 | 190 | >300 | 100 | 75 | 130 | 70 | 40 | 80 |
| | Large deformation | - | No | Yes | No | No | No | No | Yes | Yes | Yes | No | No | No |
| | Flaming | - | No | Yes | No | Yes | No | No | No | Yes | Yes | Yes | No | No |
| | Evaluation | | ⊚ | ⊚ | ○ | ⊚ | ⊚ | ⊚ | × | × | × | × | × | ○ |

### INDUSTRIAL APPLICABILITY

The laminate according to the present disclosure has excellent heat transfer delay property, and thus can be suitably used as a peripheral member of a battery (LIB, etc.) mounted on automobiles, railroad vehicles, aircraft, and the like.

## Claims

1. A laminate comprising:
an incombustible layer that contains at least one selected from the group consisting of an organic substance and a fiber-reinforced resin obtained by impregnating a fiber made of a non-metallic inorganic substance with a resin and has an oxygen index of 25 or more; and
a flame-retardant foam layer that contains a foam and whose flammability level measured based on an UL94 vertical flame test is V-2 to V-0.

2. The laminate according to claim 1, wherein the incombustible layer contains a woven fabric or a nonwoven fabric.

3. The laminate according to claim 1 or 2, wherein the foam contains a bead foam.

4. The laminate according to any one of claims 1 to 3, wherein the incombustible layer contains a woven fabric or a nonwoven fabric made of an organic substance.

5. The laminate according to any one of claims 1 to 4, comprising
an intermediate layer in which a component of the incombustible layer and a component of the foam layer are mixed, between the incombustible layer and the foam layer.

6. The laminate according to any one of claims 1 to 5, further comprising
a metal layer containing a metal.

7. The laminate according to any one of claims 1 to 6, used as a peripheral member of a lithium ion secondary battery.
